# EUROPÄISCHE PATENTSCHRIFT

(11) **EP 4 212 884 B1**
(45) Veröffentlichungstag und Bekanntmachung des Hinweises auf die Patenterteilung: **24.07.2024**
(21) Anmeldenummer: 23155247.2
(22) Anmeldetag: 15.11.2021
(51) Int. Cl.: G01P 1/12, G01P 21/00, G07C 7/00, G07C 5/08

(54) **TACHOGRAPHENSYSTEM FÜR EIN KRAFTFAHRZEUG, KRAFTFAHRZEUG UND VERFAHREN ZUM BETREIBEN EINES TACHOGRAPHENSYSTEMS**
TACHOGRAPH SYSTEM FOR A MOTOR VEHICLE, MOTOR VEHICLE AND METHOD FOR OPERATING A TACHOGRAPH SYSTEM
SYSTÈME DE TACHYGRAPHE POUR UN VÉHICULE AUTOMOBILE, VÉHICULE AUTOMOBILE ET PROCÉDÉ DE FONCTIONNEMENT D'UN SYSTÈME DE TACHYGRAPHE

(30) Priorität: 23.12.2020 DE 102020216530
(43) Veröffentlichungstag der Anmeldung: 19.07.2023
(62) Teilanmeldung aus: 21208220.0
(73) Patentinhaber: Continental Automotive Technologies GmbH, 30175 Hannover (DE)
(72) Erfinder: Rombach, Gerhard, 60488 Frankfurt am Main (DE); Müller, Kai Uwe, 60488 Frankfurt am Main (DE); Pfaff, Thomas, 60488 Frankfurt am Main (DE)
(74) Vertreter: Continental Corporation

(56) Entgegenhaltungen:
- EP-B1- 1 815 256
- DE-A1- 102007 004 645
- DE-A1- 102008 061 710
- DE-A1- 19 610 161
- US-A1- 2010 322 423

## Beschreibung

Die Erfindung betrifft ein Tachographensystem für ein Kraftfahrzeug, ein Kraftfahrzeug und ein Verfahren zum Betreiben des Tachographensystems.

Zur Überprüfung von Lenkzeiten eines Fahrers ist es üblich, dass Impulse, deren Frequenz proportional zu einer Drehung eines Getriebeelements eines Kraftfahrzeugs ist, durch ein Tachographensystem erfasst und protokolliert werden. Anhand der über einen Zeitraum aufgezeichneten Impulse lassen sich Fahrzeiten und Fahrgeschwindigkeiten des Kraftfahrzeugs nachvollziehen.

Tachographensysteme umfassen neben einem Tachographen einen Impulsgeber (im Englischen als Motion Sensor bekannt), der über eine gesicherte Schnittstelle mit dem Tachographen verbunden ist. Der Impulsgeber ist in den meisten Fällen als magnetischer Impulsmesser ausgebildet. Dieser erzeugt ein Magnetfeld, dessen Stärke durch einen Hallsensor des Impulsgebers erfasst wird. Um eine Drehung des Getriebeelements zu erfassen, wird der Impulsgeber in der Nähe von Zahnrädern mit ferromagnetischen Eigenschaften innerhalb und/oder außerhalb des Getriebes des Kraftfahrzeugs angeordnet. Bewegt sich das Zahnrad, befinden sich entweder ferromagnetische Zähne oder die Zahnzwischenräume in dem Magnetfeld des Impulsgebers. Durch die ferromagnetischen Zähne wird das durch den Impulsgeber erzeugte Magnetfeld beeinflusst. Dreht sich das Zahnrad erfolgt eine zyklische Änderung des Magnetfelds, welche durch den Impulsgeber erfasst und in elektrische Impulse umgewandelt wird. Die Zahl der Impulse in einem Zeitraum ist dabei proportional zur Drehzahl des Zahnrads.

Tachographensysteme sind einer Gefahr einer Vielzahl von unberechtigten Eingriffen ausgesetzt. Diese erfolgen, um die Protokollierung der Geschwindigkeit und / oder der Lenkzeit durch das Tachographensystem zu manipulieren. Eine Motivation für eine Manipulation ist es, eine Protokollierung von Fahrzeitüberschreitungen eines Fahrers durch das Tachographensystem zu verhindern. Eine Art der Eingriffe ist auf den Impulsgeber ausgerichtet. Hierbei wird das durch den Impulsgeber generierte Magnetfeld mit einem extern erzeugten Magnetfeld überlagert. Durch die Überlagerung des Magnetfelds des Impulsgebers ist es möglich, eine zuverlässige Erfassung einer Drehung zu verhindern, weil beispielsweise vorbestimmte Schwellenwerte zur Erfassung der Schwankungen des Magnetfelds nicht mehr überschritten werden. Eine weitergehende Auswertung des Magnetfelds, könnte eine Plausibilisierung der durch den Impulsgeber erfassten Werte ermöglichen. Damit könnte eine Abweichung der Eigenschaften eines manipulierten Magnetfelds von einem unbeeinflussten Magnetfeld erkannt werden. Ein solches Verfahren ist jedoch nicht bekannt.

Eine Lösung, die eine Manipulation über eine Überlagerung mit einem externen Magnetfeld verhindern soll, ist in der EP 2 965 093 B1 offenbart. In dieser ist ein Geschwindigkeitssensor zur Messung der Drehzahl eines Zahnrades oder eines Rades mit ferromagnetischen Zeichen offenbart. In der Offenlegungsschrift ist beschrieben, dass zwei Halldetektoren verwendet werden, die so eingerichtet sind, dass ein an einer Außenseite eines Schaltgetriebes angeschlossener Störmagnet einen magnetischen Fluss eines Magneten in einem Halldetektor schwächt, während es den magnetischen Fluss eines zweiten Magneten in dem zweiten Halldetektor verstärkt, sodass auch bei einer Störung des magnetischen Flusses mindestens einer von den Hallsensoren tätig bleibt. Der Ansatz hierbei ist eine Fremdfelderkennung beziehungsweise eine Fremdfeldkompensation.

Ein weiterer denkbarer gegen den Impulsgeber gerichteter Eingriff zielt auf den Magnetfeldsensor selbst ab. Bei diesem Eingriff wird der Magnetfeldsensor des Impulsgebers durch einen manipulierten Magnetfeldsensor ausgetauscht.

Die DE 10 2008 061 710 A1 offenbart ein Verfahren zum Betreiben einer Sensorvorrichtung und Sensorvorrichtung.

Die US 2010 0322423 A1 offenbart ein Datenübertragungsverfahren und ein Tachographensystem.

Die DE 196 10 161 A1 offenbart eine Datenübertragungsvorrichtung in einem Fahrzeug.

Es ist eine Aufgabe der Erfindung, eine Lösung bereitzustellen, um Manipulationen in einem Tachographensystem zu verhindern.

Die Erfindung umfasst ein Tachographensystem für ein Kraftfahrzeug gemäß Anspruch 1 mit einem Impulsgeber. Das Tachographensystem kann insbesondere ein digitales Tachographensystem sein, welches zur Verwendung in Nutzfahrzeugen, z. B. Lastkraftwagen, vorgesehen ist. Der Impulsgeber kann in einem Getriebe des Kraftfahrzeugs angeordnet werden und ist dazu eingerichtet, eine Drehung eines Getriebeelements mittels einer Erfassung eines durch das rotierende Getriebeelement beeinflussten Magnetfelds zu bestimmen. Es ist vorgesehen, dass das Tachographensystem eine Sensoreinrichtung aufweist. Hierbei handelt es sich um einen Magnetfeldsensor, der beispielsweise einen integrierten Schaltkreis mit einem Hallsensor (Hall-IC) umfassen kann. Die Sensoreinrichtung ist dazu eingerichtet, in einem Kalibrierungsvorgang ein Referenzmagnetfeld des Impulsgebers mehrdimensional zu erfassen. Mehrdimensional bedeutet zwei- oder dreidimensional. Mit anderen Worten umfasst das Tachographensystem die Sensoreinrichtung, die das Referenzmagnetfeld an einer vorbestimmten Position mehrdimensional in zumindest zwei Dimensionen erfassen kann. Mehrdimensional bedeutet, dass die Sensoreinrichtung die magnetische Feldstärke in zwei oder drei Raumrichtungen erfassen kann. Das Referenzmagnetfeld kann ein durch den Impulsgeber erzeugtes Magnetfeld sein, das durch die Umgebung des Impulsgebers während des Kalibrierungsvorgangs beeinflusst wurde.

Der Kalibrierungsvorgang kann beispielsweise eine mehrdimensionale Referenzmessung während der Installation oder einer Wartung der Sensoreinrichtung in einem Fahrzeug umfassen, um einen individuellen Fingerabdruck als Geheimnis zu erzeugen. Hierbei kann es genutzt werden, dass die Installation und die Wartung in einer gesicherten Umgebung erfolgen, in der nur berechtigte Personen Zugriff auf das Tachographensystem haben. Es kann zusätzlich vorgesehen sein, dass die Messung des Referenzfeldes nur durch Verwendung eines bestimmten Schlüssels oder Befehls möglich ist.

Das Tachographensystem weist eine Steuereinrichtung auf, die dazu eingerichtet ist, eine von einem Messaufbau abhängige und das erfasste Referenzmagnetfeld beschreibende Installationscharakterisierung zu generieren und in einer Speichereinrichtung des Tachographensystems zu speichern. Die Speichereinrichtung kann beispielsweise ein kryptographisch geschützter Schaltkreis (Secure Controller) des Impulsgebers sein. Es kann sich bei der Speichereinrichtung auch um einen Speicher eines Sensorelements der Sensoreinrichtung handeln. Dies kann beispielsweise der Fall sein, wenn das Sensorelement als Integrierter Schaltkreis mit Hallsensor ausgeführt ist. In diesem Fall ist es ein On-Board-Hall-IC mit integriertem Speicher. Mit anderen Worten ist die Steuereinrichtung dazu eingerichtet, das erfasste Referenzmagnetfeld auszuwerten und mittels der Installationscharakterisierung zu beschreiben. Die Steuereinrichtung kann beispielsweise ein Applikations-Microcontroller des Impulsgebers sein. Die Installationscharakterisierung ist dabei derart gestaltet, dass sie durch Merkmale der Installations-Anordnung beeinflusst ist. Bei der Installations-Anordnung kann es sich insbesondere um die Umgebung des Impulsgebers in dem Getriebe handeln.

Bei der Erfindung wird die Tatsache genutzt, dass das von dem Impulsgeber erzeugte Magnetfeld durch die Geometrie, die Materialeigenschaften und dem Abstand der Sensoreinrichtung zum Getriebeelement beeinflusst wird. Daraus folgt, dass durch Veränderungen der Installations-Anordnung eine andere Beeinflussung des von dem Impulsgeber erzeugten Magnetfelds erfolgt, als zum Zeitpunkt der Kalibrierung. Durch die unterschiedliche Beeinflussung kann ein im Betrieb beeinflusstes Betriebsmagnetfeld sich von dem Referenzmagnetfeld unterscheiden und somit nicht durch die bestimmte Installationscharakterisierung beschrieben werden. Eine Veränderung des Magnetfelds kann beispielsweise auf eine Änderung des Abstands des Getriebeelements zu dem Impulsgeber erfolgen. Ebenso führt eine Überlagerung des Magnetfelds durch ein externes Magnetfeld zu einer Veränderung des Magnetfelds, sodass dies nicht mehr durch die Installationscharakterisierung beschrieben wird. Die Überlagerung könnte beispielsweise die Beträge der Maxima und der Minima während eines Zyklus verändern. Auch könnte die Feldstärke des Magnetfelds durch einen externen Magneten in bestimmten Richtungen verändert sein. Durch die Verwendung eines mehrdimensionalen Sensors ist es möglich, Abweichungen in zwei oder drei Raumdimensionen festzustellen. Damit wird die Tatsache genutzt, dass das Magnetfeld in mehreren Raumrichtungen durch die Installations-Anordnung beeinflusst wird. Eine Berücksichtigung mehrerer Raumrichtungen ermöglicht folglich eine genauere Auswertung der Eigenschaften des Magnetfeldes, um eine Manipulation zu erkennen.

Es ist vorgesehen, dass die Steuereinrichtung des Tachographensystems dazu eingerichtet ist, die generierte Installationscharakterisierung in einer Speichereinrichtung des Tachographensystems zu speichern. Die Speichereinrichtung kann in dem Impulsgeber oder/und dem Tachographen angeordnet sein. Es kann vorgesehen sein, dass die Speichereinrichtung ein integrierter Speicher eines On-Board-Hall-IC ist. Mit anderen Worten wird die während des Kalibrierungsvorgangs generierte Installationscharakterisierung in der Speichereinrichtung nicht-flüchtig gespeichert.

Die Sensoreinrichtung ist dazu eingerichtet, ein Betriebsmagnetfeld des Impulsgebers mehrdimensional zu erfassen. Mit anderen Worten ist die Sensoreinrichtung dazu eingerichtet, erneut ein Magnetfeld des Impulsgebers mehrdimensional zu erfassen. Dieses Betriebsmagnetfeld kann beispielsweise nach der Kalibrierung während eines Betriebs des Kraftfahrzeugs durch das Tachographensystem sowie durch Kontrollorgane geprüft und verifiziert werden. Die Steuereinrichtung ist dazu eingerichtet, die Installationscharakterisierung aus der Speichereinrichtung auszulesen und das erfasste Betriebsmagnetfeld nach einem vorbestimmten Plausibilisierungsverfahren auf eine Vereinbarkeit mit der gespeicherten Installationscharakterisierung zu überprüfen. Mit anderen Worten ist es vorgesehen, dass die Steuereinrichtung anhand der Installationscharakterisierung überprüft, ob das erfasste Betriebsmagnetfeld plausibel ist. Dies bedeutet, dass das erfasste Betriebsmagnetfeld nach dem vorbestimmten Plausibilisierungsverfahren überprüft wird, um festzustellen, ob es mit dem Referenzmagnetfeld vereinbar ist. Hierbei kann beispielsweise überprüft werden, ob die Feldstärkenwerte des Betriebsmagnetfeldes angesichts der während des Kalibrierungsvorgangs gemessenen Feldstärkenwerte des Referenzmagnetfelds plausibel sind. Dadurch ergibt sich der Vorteil, dass eine Veränderung der Installations-Anordnung, beispielsweise durch eine Manipulation des Getriebes oder eine Überlagerung durch ein externes Magnetfeld erfasst werden kann. Eine mögliche Manipulation durch ein externes Magnetfeld oder eine Änderung eines Verbauorts des Impulsgebers kann somit erkannt werden.

Der Kerngedanke der Erfindung besteht in einer Überwachung der individuellen Eigenschaften eines Magnetfelds des Impulsgebers, das durch das Getriebe und Installations-Eigenschaften des Impulsgebers beeinflusst wird, um Manipulationen zu erfassen. Der Ansatz basiert auf der Tatsache, dass sich die Installationsumgebung der Getriebe in ihren magnetischen Eigenschaften voneinander unterscheiden. Dadurch weist ein statisch erfasstes oder ein während des Betriebs des Fahrzeugs dynamisch erfasstes Magnetfeld individuelle Eigenschaften auf, anhand der sich die Kombination aus dem einzelnen Magnetfeldsensor und dem einzelnen Getriebe erkennen lässt. Die individuellen Eigenschaften können beispielsweise durch unterschiedliche Geometrien und magnetische Eigenschaften des Zahnrads oder den Abstand des Magnetfeldsensors zum Zahnrad bedingt sein. Dadurch weist das Magnetfeld einer jeweiligen Kombination aus einem Magnetfeldsensor und einem Getriebe einen individuellen Fingerabdruck auf. Ist dieser Fingerabdruck in dem Tachographen oder dem Sensor hinterlegt, kann dieser dazu verwendet werden, in einem vorbestimmten Plausibilitätsverfahren ein im Stillstand oder im Betrieb erfasstes Magnetfeld zu plausibilisieren. Erfolgte beispielsweise ein Austausch oder eine Manipulation des Magnetfeldsensors, eine Überlagerung des Magnetfelds mit einem externen Magnetfeld oder eine Manipulation am Getriebeelement, ändern sich die magnetischen Eigenschaften. Dadurch weist das Magnetfeld während und/oder nach der Manipulation andere Eigenschaften auf und die erfassten Daten sind nicht plausibel angesichts des gespeicherten Fingerabdrucks.

Die Erfindung umfasst auch optionale Ausprägungen, durch die sich weitere Vorteile ergeben.

Eine Ausprägung der Erfindung sieht vor, dass die Sensoreinrichtung eine Speichereinheit aufweist, in der ein Geheimnis gespeichert ist, das individuell für die Sensoreinrichtung ist. Die Steuereinrichtung ist dazu eingerichtet, das Geheimnis aus der Speichereinheit der Sensoreinrichtung auszulesen und als Referenzgeheimnis in der Speichereinrichtung zu speichern. Mit anderen Worten weist die Sensoreinrichtung eine Speichereinheit auf, in der das Geheimnis hinterlegt ist, das eine eindeutige Identifikation der Sensoreinrichtung ermöglicht. Bei dem Geheimnis kann es sich beispielsweise um eine Zeichenkette, eine Zahl oder einen kryptographischen Schlüssel handeln und unveränderbar gespeichert sein. Die Steuereinrichtung ist dazu eingerichtet, dieses Geheimnis auszulesen und in der Speichereinrichtung zu speichern. Das ausgelesene und in der Speichereinrichtung gespeicherte Geheimnis ist dabei als Referenzgeheimnis der Steuereinrichtung vorgesehen. Mit anderen Worten wird die Steuereinrichtung durch das Geheimnis, welches in der Steuereinrichtung und der Sensoreinrichtung vorliegt mit der Sensoreinrichtung gekoppelt. Dadurch ergibt sich der Vorteil, dass die Steuereinrichtung die Sensoreinrichtung durch das Geheimnis authentisieren kann. Ein solches Verfahren ist auch als Shared-Secret-Verfahren bekannt.

Eine Ausprägung der Erfindung sieht vor, dass die Steuereinrichtung dazu eingerichtet ist, ein vorbestimmtes Authentifizierungsverfahren durchzuführen, wobei das in der Speichereinheit der Sensoreinrichtung gespeicherte Geheimnis durch die Steuereinrichtung ausgelesen und auf eine Übereinstimmung mit dem in der Speichereinrichtung gespeicherten Referenzgeheimnis geprüft wird. Mit anderen Worten ist es vorgesehen, dass die Steuereinrichtung dazu eingerichtet ist, die Sensoreinrichtung durch das vorbestimmte Authentifizierungsverfahren zu authentifizieren. Um zu überprüfen, ob es sich bei der Sensoreinrichtung um die ursprüngliche Sensoreinrichtung handelt, aus der das Referenzgeheimnis ausgelesen wurde, wird das in der angeschlossenen Sensoreinrichtung gespeicherte Geheimnis durch die Steuereinrichtung ausgelesen und überprüft, ob dieses mit dem gespeicherten Referenzgeheimnis übereinstimmt. Handelt es sich um dieselbe Sensoreinrichtung, welche mit der Steuereinrichtung gekoppelt (gepairt) wurde, sind das Referenzgeheimnis und das in der Sensoreinrichtung gespeicherte Geheimnis identisch. Handelt es sich um eine andere Sensoreinrichtung als die Sensoreinrichtung aus der das Referenzgeheimnis ausgelesen wurde, ist in dieser ein anderes Geheimnis gespeichert, welches nicht mit dem Referenzgeheimnis übereinstimmt. Dadurch ergibt sich der Vorteil, dass durch die Steuereinrichtung überprüft werden kann, ob eine Sensoreinrichtung ausgetauscht wurde.

Eine Ausprägung der Erfindung sieht vor, dass die Steuereinrichtung dazu eingerichtet ist, eine durch den Impulsgeber generierten Impulse zu empfangen und die Impulse nur in einer Protokolleinrichtung zu speichern, wenn das erfasste Betriebsmagnetfeld nach dem vorbestimmten Plausibilisierungsverfahren mit der Installationscharakterisierung vereinbar ist. Mit anderen Worten ist es vorgesehen, die Impulse nur in der Protokolleinrichtung zu protokollieren, wenn das Betriebsmagnetfeld mit der Installationscharakterisierung vereinbar ist. Dadurch ergibt sich der Vorteil, dass nur Impulse erfasst werden, bei denen eine Manipulation durch ein Anlegen eines externen Magnetfeldes oder eine Änderung im Getriebe ausgeschlossen ist. Es kann alternativ dazu vorgesehen sein, die Impulse zwar zu protokollieren, jedoch mit einem besonderen Merkmal zu speichern, das ein nichtplausibles Betriebsmagnetfeld zum Zeitpunkt des Empfangs festhält.

Eine Ausprägung der Erfindung sieht vor, dass die Steuereinrichtung dazu eingerichtet ist, die empfangenen Impulse nur in der Protokolleinrichtung zu speichern, wenn das in der Speichereinheit der Sensoreinrichtung gespeicherte Geheimnis mit dem in der Speichereinrichtung des Tachographensystems gespeicherten Referenzgeheimnis übereinstimmt. Mit anderen Worten erfolgt eine Protokollierung der Impulse in der Protokolleinrichtung nur, wenn das Authentifizierungsverfahren erfolgreich ist, und somit sichergestellt ist, dass kein Austausch der Sensoreinrichtung erfolgt ist. Dadurch ergibt sich der Vorteil, dass die Impulse nur erfasst werden, wenn ausgeschlossen ist, dass die ursprüngliche Sensoreinrichtung durch eine eventuell manipulierte Sensoreinrichtung ausgetauscht wurde. Dadurch kann sichergestellt werden, dass die empfangenen Impulse nicht auf Messungen einer ausgetauschten Sensoreinrichtung basieren. Es kann alternativ dazu vorgesehen sein, die Impulse zwar zu protokollieren, jedoch mit einem besonderen Merkmal zu speichern, das ein fehlgeschlagenes Authentifizierungsverfahren zum Zeitpunkt des Empfangs festhält.

Eine Ausprägung der Erfindung sieht vor, dass die Sensoreinrichtung einen 3-Achsen-Hallsensor umfasst. Mit anderen Worten umfasst die Sensoreinrichtung einen Sensor, der aus drei einzelnen Hallsensoren besteht, die in drei unterschiedliche Raumrichtungen ausgerichtet sind. Dadurch ergibt sich der Vorteil, dass im Gegensatz zu einer Spule Feldstärken und nicht nur Änderungen von Feldstärken in den drei Raumrichtungen erfasst werden können.

Eine Weiterbildung der Erfindung sieht vor, dass die Speichereinrichtung ein Security Controller ist. Mit anderen Worten handelt es sich bei der Speichereinrichtung um einen Schaltkreis, der eine Speichereinheit aufweist, die nur geschützt zugänglich ist. Dadurch ergibt sich der Vorteil, dass eine einfache Manipulation der in der Speichereinrichtung gespeicherten Installationscharakterisierung und des in der Speichereinrichtung gespeicherten Referenzgeheimnisses ausgeschlossen ist.

Eine Weiterbildung der Erfindung sieht vor, dass das Tachographensystem ein physisches Identifikationselement aufweist, das zur Anordnung an einem Getriebeelement vorgesehen ist. Das physische Identifikationselement kann beispielsweise ein Permanentmagnet sein, der vorbestimmte individuelle magnetische Eigenschaften aufweisen kann oder an einer vorbestimmten, individuellen Stelle an dem Getriebeelement angeordnet werden kann. Dadurch können besonders markante Merkmale zu einer Messumgebung hinzugefügt werden, wodurch eine Manipulation der Messumgebung erschwert wird.

Die Erfindung umfasst auch ein Kraftfahrzeug, das zumindest ein Tachographensystem umfasst. Das Kraftfahrzeug kann insbesondere ein Personenkraftwagen oder ein Nutzfahrzeug, z. B. ein Lastkraftwagen, sein.

Die Erfindung umfasst auch ein Verfahren zum Betreiben eines Tachographensystems für ein Kraftfahrzeug gemäß Anspruch 5 mit einem Impulsgeber. Es ist vorgesehen, dass durch eine Sensoreinrichtung des Tachographensystems, in einem Kalibrierungsvorgang ein Referenzmagnetfeld des Impulsgebers mehrdimensional erfasst wird. Durch eine Steuereinrichtung des Tachographensystems wird eine von einem Messaufbau abhängige und das erfasste Referenzmagnetfeld beschreibende Installationscharakterisierung generiert und in einer Speichereinrichtung der Steuereinrichtung gespeichert. Durch die Sensoreinrichtung wird ein Betriebsmagnetfeld des Impulsgebers mehrdimensional erfasst. Durch die Steuereinrichtung wird die Installationscharakterisierung aus der Speichereinrichtung ausgelesen und das erfasste Betriebsmagnetfeld nach einem vorbestimmten Plausibilisierungsverfahren auf eine Vereinbarkeit mit der Installationscharakterisierung überprüft.

Zu der Erfindung gehören auch Ausprägungen des erfindungsgemäßen Kraftfahrzeugs und des erfindungsgemäßen Verfahrens, die Merkmale aufweisen, wie sie bereits im Zusammenhang mit den Ausprägungen des erfindungsgemäßen Tachographensystems beschrieben worden sind. Aus diesem Grund sind die entsprechenden Ausprägungen des erfindungsgemäßen Kraftfahrzeugs und des erfindungsgemäßen Verfahrens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
Fig. 1 ein Kraftfahrzeug mit einem Tachographensystem mit einem Impulsgeber;
Fig. 2 einen Ablauf eines möglichen Verfahrens zum Betreiben eines Tachographensystems.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander ausprägen und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

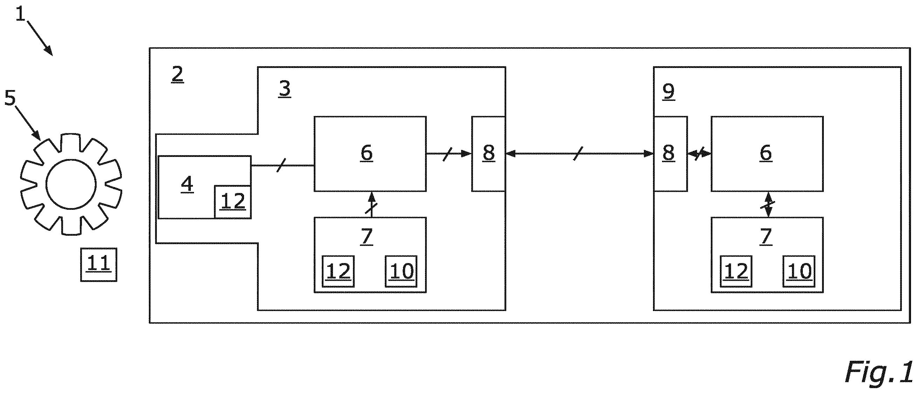

Fig. 1 zeigt ein Kraftfahrzeug 1 mit einem Tachographensystem 2 mit einem Impulsgeber 3. Der Impulsgeber 3 kann eine Sensoreinrichtung 4 aufweisen, die dazu eingerichtet ist, ein durch den Impulsgeber 3 erzeugtes und durch eine Umgebung beeinflusstes Magnetfeld an einer vorbestimmten Position in einem Getriebe des Kraftfahrzeugs 1 zu erfassen. Der Impulsgeber 3 kann sich in einem vorbestimmten Abstand zu einem Getriebeelement 5, beispielsweise einem Getriebezahnrad, des Getriebes befinden. Durch eine Drehung des Getriebeelements 5 kann sich das durch den Impulsgeber 3 erzeugte Magnetfeld zyklisch verändern. Durch eine zeitliche Abtastung des sich aufgrund der Drehung des Getriebeelements ändernden Magnetfelds kann beispielsweise über eine Frequenz der Zyklen eine Drehzahl des Getriebeelements 5 bestimmt werden.

Der Impulsgeber 3 kann beispielsweise einen 3-D Hallsensor als Sensoreinrichtung 4 aufweisen. Dieser kann dazu eingerichtet sein, dass Magnetfeld des Impulsgebers 3 in drei Raumrichtungen zu erfassen. Der Impulsgeber 3 kann eine Steuereinrichtung 6 aufweisen, die dazu eingerichtet sein kann, die zyklischen Änderungen des Magnetfelds zu erfassen und in Impulse umzuwandeln.

Das Tachographensystem kann eine Speichereinrichtung 7 aufweisen, wobei es sich um einen Security-Controller handeln kann. In der Speichereinrichtung 7 können Werte manipulationssicher gespeichert sein. Der Impulsgeber 3 kann über eine Schnittstelle 8 mit einem Tachographen 9 verbunden sein. Das Tachographensystem 2 kann den Tachographen 9 aufweisen. Der Tachograph 9 kann eine Steuereinrichtung 6 und eine Speichereinrichtung 7 aufweisen. Die Sensoreinrichtung 4 kann dazu eingerichtet sein, ein Referenzmagnetfeld und ein Betriebsmagnetfeld des Impulsgebers 3 mehrdimensional zu erfassen. Die Steuereinrichtung 6 kann aus dem erfassten Referenzmagnetfeld eine Installationscharakterisierung 10 erstellen, wobei es sich um einen sogenannten Fingerabdruck des Referenzmagnetfeldes handeln kann.

Um die Sensoreinrichtung 4 mit dem Messaufbau zu verknüpfen, kann ein Kalibrierungsvorgang durchgeführt werden, in welchem das Referenzmagnetfeld mehrdimensional erfasst wird. Da das Referenzmagnetfeld durch die Umgebung des Impulsgebers beeinflusst ist, ist es beispielsweise individuell an einzelne Elemente wie beispielsweise das Getriebeelement 5 gebunden. Das Referenzmagnetfeld kann somit durch die Geometrie und Materialzusammensetzung des Getriebeelements 5 oder einen Abstand der Sensoreinrichtung 4 zum Getriebeelement 5 beeinflusst und in seiner Charakteristik eindeutig dieser Messumgebung zuzuordnen sein. Es kann somit als eine Art Physical Unclonable Function verwendet werden. Somit lässt sich über das Referenzmagnetfeld die Umgebung eindeutig identifizieren.

Die Steuereinrichtung 6 kann dazu eingerichtet sein, das Referenzmagnetfeld auszuwerten, um eine Installationscharakterisierung 10 zu erstellen. Dabei kann es sich um einen sogenannten Fingerabdruck des Referenzmagnetfelds handeln. Die Installationscharakterisierung 10 kann Parameter enthalten, welche Eigenschaften des Referenzmagnetfelds beschreiben und es ermöglichen, das Referenzmagnetfeld von anderen Magnetfeldern zu unterscheiden. Die Parameter können Wertebereiche der Feldstärken des Magnetfelds in den mehrdimensionalen Raumrichtungen oder deren Korrelation umfassen. Die generierte Installationscharakterisierung 10 kann in der Speichereinrichtung 7 gespeichert werden, wobei es sich um einen Security Controller handeln kann. Dadurch ist die Installationscharakterisierung 10 in einer vor Manipulationen geschützten Weise gespeichert.. Die Sensoreinrichtung 4 kann als integrierter Schaltkreis mit Hallsensor gestaltet sein, in welchem auch die Steuereinrichtung 6 und die Speichereinrichtung 7 integriert sein können. Das Referenzmagnetfeld zur Generierung der Installationscharakterisierung 10 kann in einem statischen Kalibrierungsvorgang, bei einem stillstehenden Getriebeelement 5 oder bei einem sich bewegenden Getriebeelement 5 aufgezeichnet sein.

Die Steuereinrichtung 6 kann dazu eingerichtet sein, ein weiteres durch die Sensoreinrichtung 4 erfasstes Magnetfeld nach dem vorbestimmten Plausibilisierungsverfahren auszuwerten und somit erkennen ob, die Werte des Magnetfelds mit dem Fingerabdruck vereinbar sind. Bei dem Magnetfeld kann es sich um ein Betriebsmagnetfeld handeln, das während des Betriebs des Fahrzeugs aufgezeichnet worden sein kann. Dabei kann es sich um ein statisches oder dynamisches Feld handeln das ebenfalls von der Umgebung abhängig ist. Eine Abweichung des Betriebsmagnetfelds von dem Referenzmagnetfeld kann sich beispielsweise durch eine Änderung der Messumgebung, beispielsweise durch eine Änderung des Getriebeelements 5 oder eines Verbauorts der Sensoreinrichtung 4, ergeben oder eine Überlagerung des Magnetfelds der Sensoreinrichtung 4 durch ein externes Magnetfeld. Um Alterungsprozesse oder Schwankungen zu berücksichtigen kann es vorgesehen sein, dass die Steuereinrichtung 6 während des vorbestimmten Plausibilisierungsverfahrens vorbestimmte Toleranzen berücksichtig, die Abweichungen in einem vorbestimmten Umfang zulassen. Als zusätzlicher Schutz vor einer Manipulation kann in der Messumgebung, beispielsweise an dem Getriebeelement 5 ein Identifikationselement 11 angeordnet sein. Dabei kann es sich um einen Permanentmagneten mit vorbestimmten individuellen magnetischen Eigenschaften handeln. Dadurch kann eine Manipulation der Messumgebung zusätzlich erschwert sein.

Um einen Austausch der Sensoreinrichtung 4 erkennbar machen zu können, kann die Steuereinrichtung 6 dazu eingerichtet sein, ein Geheimnis 12 aus einem Speicher der Sensoreinrichtung 4 auszulesen und in der Speichereinrichtung 7 als Referenzgeheimnis zu speichern. Die Steuereinrichtung 6 kann dazu eingerichtet sein, das Geheimnis 12 der Sensoreinrichtung 4 beispielsweise bei einer Inbetriebnahme der Sensoreinrichtung 4 auszulesen und mit dem gespeicherten Referenzgeheimnis zu vergleichen. Die Steuereinrichtung 6 kann dazu eingerichtet sein, bei einer Abweichung zwischen den beiden Geheimnissen 12 eine Manipulation zu erkennen. Es kann vorgesehen sein, dass das Tachographensystem im Fall einer Erfassung eines nicht-plausiblen Betriebsmagnetfeldes und/oder einer Abweichung der Geheimnisse, eine Protokollierung der Impulse verweigert.

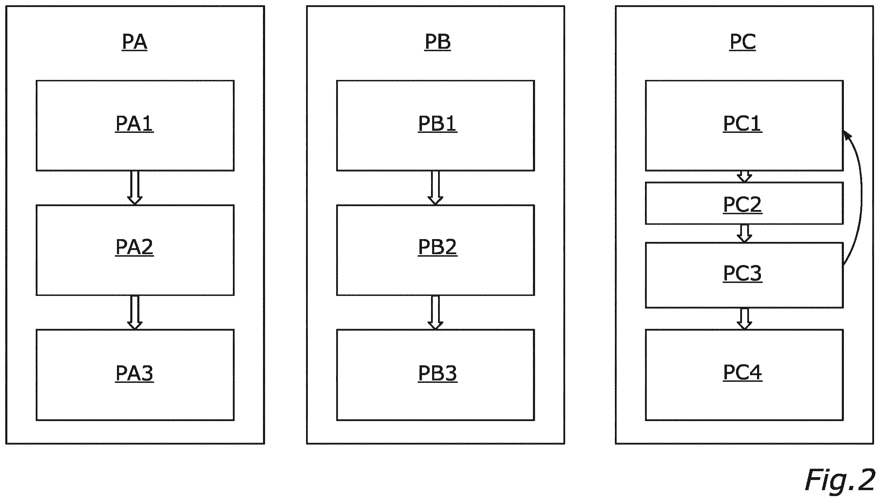

Fig. 2 zeigt einen Ablauf eines möglichen Verfahrens zu betreiben eines Tachographensystems. Das Verfahren kann drei Teilverfahren PA, PB, PC umfassen.

Das erste Teilverfahren PA kann dafür vorgesehen sein, die Sensoreinrichtung 4 des Pulsgebers 3 mit der Steuereinrichtung 6 des Impulsgebers 3 zu verknüpfen. Dadurch kann sichergestellt werden, dass ein Austausch der Sensoreinrichtung 4 durch die Steuereinrichtung 6 erkannt werden kann. Manipulationsansätze, die auf einen Austausch der vorgesehenen Sensoreinrichtung 4 durch eine modifizierte Sensoreinrichtung 4 basieren können somit verhindert werden. Das erste Teilverfahren PA kann bevorzugt in einem gesicherten Bereich während der Produktion des Impulsgebers 3 erfolgen.

In einem ersten Schritt PA1 kann der Impulsgeber 3 initialisiert werden. In der Sensoreinrichtung 4 kann ein individuelles und unveränderbares Geheimnis 12 gespeichert sein. Dadurch kann die Sensoreinrichtung 4 eindeutig identifiziert werden.

Die Steuereinrichtung 6 kann in einem zweiten Schritt PA2 das in der Sensoreinrichtung 4 gespeicherte Geheimnis 12 abrufen.

In einem dritten Schritt PA3 kann die Steuereinrichtung 6 das aus der Sensoreinrichtung 4 abgerufene Geheimnis 12 als sogenanntes Referenzgeheimnis 12 in der Speichereinrichtung 7 speichern. Bei der Speichereinrichtung 7 kann es sich insbesondere um einen geschützten Speicher handeln, sodass das in der Speichereinrichtung 7 gespeicherte Geheimnis 12 nicht durch Unbefugte ausgetauscht werden kann. Bei einer Initialisierung des Impulsgebers 3 kann die Steuereinrichtung 6 das Referenzgeheimnis 12 aus der Sensoreinrichtung 4 auslesen und dem Referenzgeheimnis 12 in der Speichereinrichtung 7 vergleichen. Stimmen diese beiden überein, ist sichergestellt, dass die ursprüngliche Sensoreinrichtung 4 noch in dem Impulsgeber 3 verbaut ist. Bei einer Abweichung kann festgestellt werden, dass die Geheimnisse 12 voneinander abweichen. In diesem Fall kann die Sensoreinrichtung 4 in den Impulsgeber 3 ausgetauscht sein.

Das zweite Teilverfahren PB kann dafür vorgesehen sein, den Impulsgeber 3 mit dem Messaufbau, beispielsweise den Bereich, in dem das Getriebeelement 5 und der Impulsgeber 3 verbaut sind, miteinander zu verknüpfen. In diesem Schritt kann auch der Impulsgeber 3 mit dem Tachographen 9 verknüpft werden. In einem ersten Schritt PB1 kann der Impulsgeber 3 mit dem Tachographen 9 verknüpft werden.

Dies kann beispielsweise über das geteiltes Geheimnis 12 erfolgen, das in der Speichereinrichtung 7 des Tachographen 9 gespeichert werden kann.

In einem zweiten Schritt PB2 kann das Magnetfeld durch die Sensoreinrichtung 4 dreidimensional erfasst werden. Dies kann im statischen Zustand und oder im dynamischen Zustand bei Betrieb des Fahrzeugs 1 erfolgen. Das erfasste Magnetfeld ist durch den Messaufbau beeinflusst und somit für das Getriebe und den Impulsgeber 3 einzigartig.

In einem dritten Schritt PB3 kann die Steuereinrichtung 6 des Impulsgebers 3 Messdaten, welche das erfasste Magnetfeld beschreiben, speichern. Die Steuereinrichtung 6 kann auch das erfasste Referenzmagnetfeld nach einem vorbestimmten Verfahren auswerten, um daraus eine Installationscharakterisierung 10 zu generieren, welche bestimmte Eigenschaften und Merkmale des Magnetfelds beschreiben kann. Die Installationscharakterisierung 10 kann dafür vorgesehen sein, das Referenzmagnetfeld von anderen Magnetfeldern zu unterscheiden, um somit eine Manipulation der Messumgebung oder eine Überlagerung des Betriebsmagnetfelds mit einem externen Magnetfeld zu erfassen. Damit eine Umgehung dieses Schutzes durch eine Veränderung der gespeicherten Installationscharakterisierung 10 verhindert werden kann, kann die Installationscharakterisierung 10 ebenfalls geschützt in der Speichereinrichtung 7 gespeichert werden. Zusätzlich oder alternativ dazu kann die Generierung und/oder die Speicherung der Installationscharakterisierung 10 in der Steuereinrichtung 6 und der Speichereinrichtung 7 des Tachographen 9 erfolgen.

Das dritte Teilverfahren PC kann während des Betriebs des Fahrzeugs 1 erfolgen. Während des Betriebs können in einem ersten Schritt PC1 das Geheimnis 12 der Sensoreinrichtung 4 mit dem Referenzgeheimnis 12 verifiziert werden. Das durch die Sensoreinrichtung 4 erfasste Magnetfeld kann mittels des vorbestimmten Plausibilitätsverfahrens überprüft werden, indem geprüft wird, ob das erfasste Betriebsmagnetfeld plausibel zu der Installationscharakterisierung ist.

Dabei können in einem Schritt PC2 Prüfungen unter Berücksichtigung vorbestimmter Toleranzgrenzen erfolgen, um eventuelle temperatur- oder alterungsbedingte Schwankungen und Abweichungen zu berücksichtigen.

Wird in einem Schritt PC3 erfasst, dass sich das Betriebsmagnetfeld nicht mit der Installationscharakterisierung 10, auch unter Berücksichtigung der Toleranzen plausibilisieren lässt, wird erneut der Schritt PC1 durchgeführt. Ist das Plausibilitätsverfahren erfolgreich, können die erfassten Drehzahlen in einem Schritt PC4 durch den Tachographen 9 gespeichert werden.

Impulsgeber im Automotive-Bereich tasten im Getriebe Zahnräder oder vergleichbare Anordnungen ab. Als Sensor-Element werden oft Hall-Sensoren für die Auswertung des Magnetfeldes verwendet. Für die Abtastung der Magnet- bzw. B-Feld-Abweichung reicht für eine einfache Anwendung ein Ein-Achs-Hall-Sensor-Element aus.

Im Bereich der Tachographensysteme ist dabei Folgendes kritisch:
Das Magnetfeld kann durch ein Fremdfeld manipuliert oder gestört werden. Das interne Interface von Sensor zu Controller könnte manipulierbar sein.

Derzeit gibt es kein sicheres Interface zwischen Magnet-Feld-Sensor und Controller. Es ist keine Erkennung eines "eigenen" Magnet-Feld-Verhaltens von dem Getriebe und dem Sensor möglich und somit sind keine individuellen Merkmale des Magnetfelds festlegbar. Es sind keine Plausibilitätsdaten in dem Sensor und dem angeschlossenen Tachographen authentisiert hinterlegbar, welche einen Vergleich des Magnetfelds, das bei dynamischen oder statischen Messungen im Stillstand erfasst wurde, mit dem während des Fahrbetriebs erfassten Magnetfeld ermöglichen. Bisher sind keine Plausibilitätstests bei der Installation von Getriebe und Sensor durchführbar.

Die Erfindung kann z. B. folgende Merkmale umfassen:
Die Erkennung eines "eigenen" Magnet-Feld-Verhaltens des Getriebes und des Sensors und somit eine Festlegung von individuellen Merkmalen (Fingerprint). Die Festlegung von Plausibilitäts-Daten für die Installation von Getriebe und Sensor. Plausibilitäts-Daten können im Sensor und dem angeschlossenen Tachographen authentisiert hinterlegt sein, um einen Vergleich mit dynamische Messungen im Fahrbetrieb zu ermöglichen. Eine Hinterlegung ist im Sensor oder/und dem Tachographen möglich. Durch die Erfindung wird eine sichere Erkennung des original verbauten Impulsgebers ermöglicht und ein sicheres Interface zwischen dem Magnet-Feld-Sensor (Sensoreinrichtung) und dem Controller (Steuereinrichtung) bereitgestellt. Es wird ein Mehrstufiges Sicherheitskonzept von Sensorkopf bis Recording Unit ermöglicht, dadurch ist eine wesentlich erhöhte Manipulationssicherheit gegeben. Die Auswertung des "Fingerprints" ist sowohl im Geber als auch in der Recording Unit möglich, abhängig von System-Auslegung und Konzeptionierung des Konzepts.

Der Vorteil der Erfindung ist eine erhöhte Manipulationssicherheit. Es sind zusätzliche Funktionen möglich wie z. B. Einbau-Verhältnisse von Sensor und Getriebe, Speicherung und Auswertbarkeit. Es erfolgt optional eine Optimierung der Magnetfeld-Abtastung durch einen mehrdimensionalen Hall-IC.

Insgesamt zeigt das Beispiel, wie durch die Erfindung eine Möglichkeit zur Authentisierung eines Magnetfeldes und einer Sensoreinrichtung bereitgestellt werden kann.

## Patentansprüche

1. Tachographensystem (2) für ein Kraftfahrzeug (1), aufweisend einen Impulsgeber (3) , **dadurch gekennzeichnet , dass**
- der Impulsgeber (3) des Tachographensystems (2) eine Sensoreinrichtung (4) aufweist, die eine Speichereinheit aufweist, in der ein Geheimnis (12) unveränderbar gespeichert ist, das individuell für die Sensoreinrichtung (4) ist,
- das Tachographensystem (2) eine Steuereinrichtung (6) aufweist, die dazu eingerichtet ist, das Geheimnis (12) aus der Speichereinheit auszulesen und als Referenzgeheimnis (12) in einer Speichereinrichtung (7) des Tachographensystems (2) zu speichern, und
die Steuereinrichtung (6) dazu eingerichtet ist, ein vorbestimmtes Authentifizierungsverfahren durchzuführen, wobei
das in der Speichereinheit der Sensoreinrichtung (4) gespeicherte Geheimnis (12) durch die Steuereinrichtung (6) ausgelesen und auf eine Übereinstimmung mit dem in der Speichereinrichtung (7) des Tachographensystems (2) gespeicherten Referenzgeheimnis (12) geprüft wird.

2. Tachographensystem (2) nach Anspruch 1, **dadurch gekennzeichnet , dass** die Steuereinrichtung (6) dazu eingerichtet ist, durch den Impulsgeber (3) erzeugte Impulse zu empfangen und die erfassten Impulse nur in einer Protokolleinrichtung zu protokollieren, wenn das in der Speichereinheit der Sensoreinrichtung (4) gespeicherte Geheimnis (12) mit dem in der Speichereinrichtung (7) des Tachographensystems (2) gespeicherten Referenzgeheimnis (12) übereinstimmt.

3. Tachographensystem (2) nach einem der vorhergehenden Ansprüche **dadurch gekennzeichnet , dass** die Speichereinrichtung (7) ein Security-Controller ist.

4. Kraftfahrzeug (1), umfassend ein Tachographensystem (2) nach einem der vorhergehenden Ansprüche.

5. Verfahren zum Betreiben eines Tachographensystems (2) für ein Kraftfahrzeug (1) aufweisend einen Impulsgeber (3),
**dadurch gekennzeichnet , dass**
- durch eine Steuereinrichtung (6) des Tachographensystems (2), ein Geheimnis (12), das individuell für eine Sensoreinrichtung (4) des Impulsgebers (3) des Tachographensystems (2), ist und unveränderbar in einer Speichereinheit der Sensoreinrichtung (4) gespeichert ist, aus der Speichereinheit der Sensoreinrichtung (4) ausgelesen wird,
- das Geheimnis als Referenzgeheimnis (12) in einer Speichereinrichtung (7) des Tachographensystems (2) gespeichert wird,
- durch die Steuereinrichtung (6) ein vorbestimmtes Authentifizierungsverfahren durchgeführt wird, wobei
das in der Speichereinheit der Sensoreinrichtung (4) gespeicherte Geheimnis (12) durch die Steuereinrichtung (6) ausgelesen und auf eine Übereinstimmung mit dem in der Speichereinrichtung (7) des Tachographensystems (2) gespeicherten Referenzgeheimnis (12) geprüft wird.

## Claims

1. Tachograph system (2) for a motor vehicle (1), having a pulse generator (3), **characterized in that**
- the pulse generator (3) of the tachograph system (2) has a sensor device (4) having a storage unit in which a secret (12) that is specific to the sensor device (4) is stored in an unchangeable manner,
- the tachograph system (2) has a control device (6) which is configured to read the secret (12) from the storage unit and to store it as a reference secret (12) in a storage device (7) of the tachograph system (2), and
the control device (6) is configured to carry out a predetermined authentication method, wherein
the secret (12) stored in the storage unit of the sensor device (4) is read by the control device (6) and is checked for correspondence with the reference secret (12) stored in the storage device (7) of the tachograph system (2).

2. Tachograph system (2) according to Claim 1, **characterized in that** the control device (6) is configured to receive pulses generated by the pulse generator (3) and to log the captured pulses in a log device only when the secret (12) stored in the storage unit of the sensor device (4) corresponds to the reference secret (12) stored in the storage device (7) of the tachograph system (2).

3. Tachograph system (2) according to one of the preceding claims, **characterized in that** the storage device (7) is a security controller.

4. Motor vehicle (1) comprising a tachograph system (2) according to one of the preceding claims.

5. Method for operating a tachograph system (2) for a motor vehicle (1) having a pulse generator (3),
**characterized in that**
- a control device (6) of the tachograph system (2) reads a secret (12), which is specific to a sensor device (4) of the pulse generator (3) of the tachograph system (2) and is stored in an unchangeable manner in a storage unit of the sensor device (4), from the storage unit of the sensor device (4),
- the secret is stored as a reference secret (12) in a storage device (7) of the tachograph system (2),
- the control device (6) carries out a predetermined authentication method,
wherein
the secret (12) stored in the storage unit of the sensor device (4) is read by the control device (6) and is checked for correspondence with the reference secret (12) stored in the storage device (7) of the tachograph system (2).

## Revendications

1. Système de tachygraphe (2) pour un véhicule automobile (1), comprenant un transmetteur d'impulsions (3), **caractérisé en ce que**
- le transmetteur d'impulsions (3) du système de tachygraphe (2) possède un dispositif de détection (4), lequel comporte une unité de mémoire dans laquelle un secret (12), qui est individuel pour le dispositif de détection (4), est mémorisé de manière non modifiable,
- le système de tachygraphe (2) possède un dispositif de commande (6) qui est conçu pour lire le secret (12) depuis l'unité de mémoire et pour l'enregistrer en tant que secret de référence (12) dans un dispositif de mémoire (7) du système de tachygraphe (2), et
le dispositif de commande (6) est conçu pour exécuter une procédure d'authentification prédéterminée,
le secret (12) mémorisé dans l'unité de mémoire du dispositif de détection (4) étant lu par le dispositif de commande (6) et sa concordance avec le secret de référence (12) mémorisé dans le dispositif de mémoire (7) du système de tachygraphe (2) étant vérifiée.

2. Système de tachygraphe (2) selon la revendication 1, **caractérisé en ce que** le dispositif de commande (6) est conçu pour recevoir des impulsions générées par le transmetteur d'impulsions (3) et pour n'enregistrer les impulsions détectées dans un dispositif d'enregistrement que si le secret (12) mémorisé dans l'unité de mémoire du dispositif de détection (4) coïncide avec le secret de référence (12) mémorisé dans le dispositif de mémoire (7) du système de tachygraphe (2).

3. Système de tachygraphe (2) selon l'une des revendications précédentes, **caractérisé en ce que** le dispositif de mémoire (7) est un contrôleur de sécurité.

4. Véhicule automobile (1), comprenant un système de tachygraphe (2) selon l'une des revendications précédentes.

5. Procédé pour faire fonctionner un système de tachygraphe (2) pour un véhicule automobile (1) comprenant un transmetteur d'impulsions (3),
**caractérisé en ce que**
- un secret (12), qui est individuel pour un dispositif de détection (4) du transmetteur d'impulsions (3) du système de tachygraphe (2) et qui est mémorisé de manière non modifiable dans une unité de mémoire du dispositif de détection (4), est lu depuis l'unité de mémoire du dispositif de détection (4) par un dispositif de commande (6) du système de tachygraphe (2),
- le secret est mémorisé en tant que secret de référence (12) dans un dispositif de mémoire (7) du système de tachygraphe (2),
- une procédure d'authentification prédéterminée est exécutée par le dispositif de commande (6),
le secret (12) mémorisé dans l'unité de mémoire du dispositif de détection (4) étant lu par le dispositif de commande (6) et sa concordance avec le secret de référence (12) mémorisé dans le dispositif de mémoire (7) du système de tachygraphe (2) étant vérifiée.
